# EUROPEAN PATENT SPECIFICATION

(11) **EP 3 927 908 B1**
(45) Date of publication and mention of the grant of the patent: **16.08.2023**
(21) Application number: 19709836.1
(22) Date of filing: 19.02.2019
(51) Int. Cl.: E04F 13/04, E04B 1/84, C09J 7/21, B32B 5/24, E04B 1/82, E04B 1/68, C09J 7/38

(54) **JOINT TAPE FOR ATTACHMENT TO A CEILING OR A WALL**
FUGENBAND ZUR BEFESTIGUNG AN EINER DECKE ODER EINER WAND
BANDE DE RECOUVREMENT DES JOINTS POUR LA FIXATION À UN PLAFOND OU À UN MUR

(43) Date of publication of application: 29.12.2021
(73) Proprietor: Knauf Gips KG, 97346 Iphofen (DE); 3D COATINGS GmbH & Co. KG, 97234 Reichenberg (DE)
(72) Inventor: POINTL, Stefan, 4810 Gmunden (AT); STUBITS, Robert, 1230 Wien (AT); WILHELM, Andreas, 94431 Pilsting (DE); PHILIPP, Simon, 97074 Würzburg (DE); MARQUARDT, Andreas, 97261 Güntersleben (DE); VIEBAHN, Michael, 97346 Iphofen (DE); SCHÄFER, Matthias, 97244 Bütthard (DE)
(74) Representative: Gleim, Christian Ragnar
(86) International application number: PCT/EP2019/000049
(87) International publication number: WO 2020/169169

(56) References cited:
- EP-A1- 1 541 777
- WO-A1-2017/029146
- DE-A1-102013 214 316
- FR-A1- 2 587 396
- GB-A- 2 079 626

## Description

The invention relates to a joint tape, especially for attachment to a ceiling or a wall, in particular to an acoustic ceiling made of perforated building panels, a method for providing building panels with a joint tape, and the use of a joint tape.

In the technical field of interior constructions for buildings, it is known to apply perforated building panels (e.g. perforated gypsum plasterboards, perforated boards made of other materials as for example ply wood), specifically in the construction of acoustic ceilings. Perforated building panels usually have a sharp edge and not an otherwise frequently encountered bevel. However, it is difficult to provide an acoustic ceiling with closed (or sealed) joints using perforated building panels.

It is known to provide joint tapes and crack bridges in the field of drywall. An example joint tape according to the preamble of claim 1 is known from EP 1 541 777 A1. A typical reinforcing tape for bridging cracks and having a droplet distribution of adhesive on a non-woven substrate is known form FR2 587 396 A1. However, such products were never applied for acoustic ceiling systems comprising perforated building panels: the joint tapes or crack bridges that are used in connection with the treatment of joints (or gaps) between conventional gypsum plasterboards, gypsum fiber boards or other building panels are either resistant to tearing and then usually too wide and too thick and thus need to be plastered over a large area, or be incorporated into joint cavities. Both cannot be realized constructively in perforated ceiling systems.

Further, the connection of two perforated building panels is usually done by adhesives, especially liquid glue, or by joint fillers. However, both options are time consuming, since they require several working steps (e.g. sanding, removing dust, gluing, drying) and, the application of adhesives or joint fillers is unclean and requires preparation for example by the covering of the floor at the construction site.

For example, for an acoustic ceiling with closed (or sealed) joints using perforated building panels, the preparation of the joints between two building panels starts with sanding of the area around the joint and wiping the sanded area with a damp dish or sponge to remove the dust and debris from the sanding step. Liquid glue is applied by a roller and a joint tape is attached such that the joint (or gap) is completely covered. Thereafter, the liquid glue can be applied to the attached joint tape to provide a surface, which can be painted to finish the surface.

A disadvantage related to this technique is that the joint tape is applied by use of a gluing substance. The application of glue is time consuming because two separate steps have to be performed. In particular, after the first application, the first glue layer needs to dry and cure completely. In general, the application of glue is unclean and requires preparation for example by the covering of the floor at the construction site. Moreover, it requires high working precision to install a joint tape in this way, which extends over the entire ceiling surface. That makes the installation time consuming on site.

The object of the invention is therefore to provide a joint tape which overcomes or at least reduces the disadvantages known from the prior art and in particular a joint tape which can be installed quickly and which can be applied without the use of additional, especially liquid, adhesives.

The problem is solved by a joint tape according to claim 1.

The invention comprises a joint tape for attachment to a ceiling or a wall. The joint tape comprises a layer of permeable non-woven material and an adhesive layer attached to the permeable non-woven material or fleece. The adhesive layer is applied to one side of the non-woven material in a pattern comprising sections without adhesive applied thereto. The non-woven material is a (sheet-like) web of entangled fibers bonded together which is permeable for the penetration of fluids. The adhesive layer comprises an adhesive capable of adhering to the joint tape and of bonding with the outer surface of building panels in order to attach the joint tape to the ceiling or the wall. The pattern with sections without adhesive allows for the penetration of e.g. a paint or a joint filler through the permeable non-woven material to form a contact with the building panel. Hence, additional bonding for the joint tape to the ceiling is provided by the paint or the joint filler, which is attached on the joint tape after installation. This joint tape can be installed dry and quickly by only attaching the joint tape to the building panels. Since no individual step of applying an (liquid) adhesive is required, the joint tape can be applied cleanly and no pre-arrangements, like covering the floor, are required before the installation.

According to a preferred technical aspect of the invention, the adhesive layer is a self-adhesive layer. Such a self-adhesive layer comprises an adhesive, which forms a bond between the non-woven material and the building panel by pressing the joint tape against the building panel. The self-adhesive is chosen to be capable of adhering to the non-woven material and of bonding it with sufficient strength to the surface of the building panel.

Another technically preferred aspect relates to the adhesive layer, which has a weight in the range of 3 to 60 g/m². This range for the weight (per area) of the adhesive layer allows for providing an adhesive layer with enough adhesive material to achieve a sufficient bonding strength to attach the joint tape at the surface of the building panel. The upper limit is chosen according to the requirement of a limited overall thickness of the joint tape, which prevents the occurrence of visible edges at the border of the installed joint tape. The edge between joint tape and regular board surface shall be optically unobtrusive. However, if such an unobtrusive appearance is not required, a higher grammage is suitable as well.

It is preferred if the adhesive layer comprises a regular pattern of glue, e.g. in the form of dots. However, stripes or waveforms are generally also applicable. The regular pattern has advantages during the production as they can be applied via rotary printing like rotary flexo, rotary gravure or rotary screen-printing in a continuous manner, i.e. for reel to reel production methods.

According to a preferred aspect each glue dot has an identical size, preferable having a diameter in the range between 0.1 to 4.0 mm preferably between 0.1 to 2.0 mm. This diameter size ensures that at the same time a sufficient adherence to the non-woven material and the building board is achieved. At the same time, the contours of the individual glue dots are preferably not visible through the attached joint tape.

It is moreover of advantage if the regular pattern comprises 25 to 15625 glue dots per 625 mm², preferably 100 to 6400 glue dots per 625 mm². These values for the number of glue dots relate in particular to the technique for the application via rotary screen-printing, wherein for example the number of 25 comprises 5 glue dots arranged equidistant along a line having the length of one inch (wherein 1 inch equals 2.54 cm).

The adhesive layer can be applied as regular pattern comprising glue stripes or as irregular pattern comprising glue stripes. Pattern which comprise stripes whether they are regular or irregular allow for the penetration of paint or joint filler because of they provide sections without applied adhesive. In principle, the stripe pattern can be combined with the dot pattern.

According to another preferred aspect, the adhesive layer comprises a polymer material.

Another advantageous aspect relates to the polymer material comprising at least one of the group of acrylates and rubber. The rubber is preferably a synthetic rubber. However, UV curing acrylates result in a good light constancy/resistance.

It is particularly preferred that the adhesive layer comprises a hot melt adhesive (e.g. synthetic rubber, UV-curing acrylates), a (dried) dispersion-based adhesive (e.g. acrylic adhesives) or a solvent-based adhesive (e.g. acrylic adhesive).

Another advantageous aspect relates to the layer of the permeable non-woven material comprising a non-woven material of at least 30 to 100 weight-% of glass-, mineral-, carbon- or synthetic-fibers. This range as well as the selection of materials is chosen to provide a non-woven material with sufficient dimensional stability over a long period in order to avoid cracks at the edge of the installed joint tape. Further, these materials ensure low shrinking of the tape from the wet to the dry state.

Preferably, the layer of the permeable non-woven material has a grammage in the range of 10 to 70 g/m². The grammage of the non-woven material is chosen so that if a paint is applied at the construction site with a standard roller the edge of the applied joint tape appears virtually invisible for a viewer in a room after the application of the paint. The same is true if a joint filler is applied.

Preferably, the layer of permeable non-woven material has a thickness of 8 to 40 µm. The thickness of the non-woven material is chosen in view of the same requirements considered for the grammage.

Particularly advantageous is if the layer of permeable non-woven material has an air permeability of 1000 to 15000 l/(m²s). This range for the air permeability provides a non-woven material, which can be penetrated by e.g. a liquid paint or a joint filler applied to the joint tape to get in contact with the surface of the building board in a manner to provide for sufficient adherence.

Another technically preferred aspect relates to that the joint tape has a grammage of 15 to 100 g/m². The grammage range is chosen so that the edge of the applied joint tape is not visible for a viewer in a room, especially when painted over or a joint filler is applied.

According to the invention, the thickness of the joint tape ranges from 15 to 80 µm. Those values allow for providing a joint tape, which can be applied without visible edge.

Advantageously, the air permeability of the joint tape is 2000 to 7000 l/(m²s). The combined air permeability comprises the air permeability of the adhesive layer and the non-woven material and allows for the sufficient penetration of paint or joint filler. Preferably, the joint tape has a width of 4 mm to 15 mm, more preferably of 5 to 10 mm, even more preferably of 7 to 9 mm, most preferably of 8 mm. This range allows for providing non-perforated plain borders and perimeters, preferably for acoustic ceilings. Another aspect of the invention relates to a method for providing a closed surface of building panels. The method comprises the steps of:
- providing a surface of (e.g. perforated) building panels; (and thereafter)
- applying a joint tape, preferably an self-adhesive joint tape (as described above), to the joints of the surface of building panels; (and thereafter)
- applying a paint or a joint filler covering at least the edge of the joint tape and the adjacent building panels comprising the joint tape; and (thereafter)
- optionally sanding the edge area of the joint tape.

In another aspect, the invention relates to the use of a joint tape as described above for sealing joints on a surface of building panels, preferably of perforated building panels.

In the following, the invention will be explained in more detail with reference to drawings. Like reference numerals denote similar features throughout the drawings.

The drawings show:
- Fig. 1: top view of a section of a joint tape for attachment to a ceiling according to the invention;
- Fig. 2: side view of the joint tape shown in Fig. 1; and
- Fig. 3: cutout of an acoustic ceiling having a joint tape applied on top of the joint of two perforated building panels.

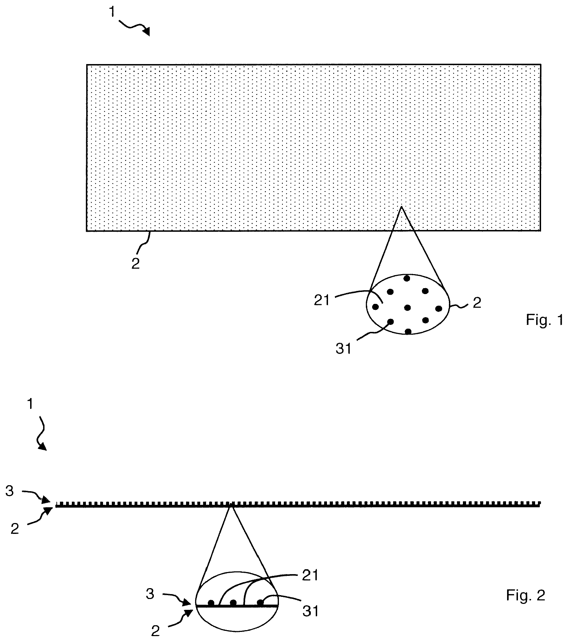

In **Fig. 1** a section of a joint tape 1 for attachment to a (acoustic) ceiling is illustrated. Such a section for example can be cut from a roll in which joint tape 1 is available in the market. Joint tape 1 comprises a layer of permeable non-woven material 2 and an adhesive layer 3 attached to the non-woven material 2.

The application of the illustrated joint tape 1 to a layer of building boards requires no liquid adhesive during the installation so that the application is clean and no pre-arrangements, like covering the floor, are required before the installation.

In the shown example, the non-woven material comprises synthetic fibers, which provide dimensional stability. The grammage of the non-woven is in the illustrated example in the range of 10 to 70 g/m². The permeable non-woven material 2 has a thickness of 8 to 40 µm while providing an air permeability in the range of 1000 to 15000 l/(m²s).

The adhesive layer 3 is arranged at one side of the non-woven material 2 in a regular pattern of glue dots 31. In the illustrated example, the adhesive layer 3 has a weight of 3 to 60 g/m². The pattern comprises glue dots 31, preferably of an identical size, which are arranged in an amount in the range of 25 to 15625 glue dots per 625 mm². The adhesive may be a hot melt adhesive made of an UV-light curable acrylic polymer material.

The circular area 2 shows an enlarged section of the joint tape 1 in the top view. It illustrates areas 21 without adhesive applied thereto and glue dots 31.

In a particular example, the joint tape 1 as shown in **Fig. 1** is made of a non-woven material 2 "Vlies VILEDON T 1790C" available in the market from Freudenberg Vliesstoffe/Weinheim consisting of 100% glass fiber, 30 g/m² weight/area and an air permeability of about 8.000 l/(m² × s) (measured with AKUSTRON from rycobel group ibwalther/Uffenheim).

An adhesive layer 3 is applied to the exemplified non-woven material 2, the adhesive layer 3 having a weight/area in the range of 2.0 to 2.5 g/m² and is a hot melt adhesive e.g "Technomelt 8783" from Henkel/Düsseldorf. The adhesive layer 3 is applied with a 20 dpi-pattern of glue dots 31 so that the air permeability of the adhesive layer 3 is about 6.000 l/(m²s) determined by the above mentioned AKUSTRON device. The joint tape 1 has in this specific example a width of 8 mm.

The adhesive layer 3 can be covered and protected by the silicone layer of a one side siliconized paper (not shown), e.g. RB065/2 from Cotek Papers Ltd/Draycott, Great Britain, in order to allow for rolling up of the joint tape. The protective siliconized paper has to be removed before applying the joint tape to a ceiling or a wall.

The particular combination of non-woven material 2 and adhesive layer 3 that is shown in **Fig. 1** is preferred, but generally, the non-woven material 2 and the adhesive layer 3 can be combined without restriction within the above-mentioned ranges.

In **Fig. 2** a side view of a section of the joint tape 1 for attachment to a ceiling or a wall is illustrated. In the side view, as well, can be seen that the joint tape 1 comprises a layer of permeable non-woven material 2 and an adhesive layer 3 attached to the non-woven material 2. In the circle 2 below, an enlarged section of the joint tape 1 is illustrated in the side view, which gives a detailed illustration of the thickness of the adhesive joint tape 1, which is in the range of 15 to 80 µm and the thickness of the permeable non-woven material 2 which is in the range of 8 to 40 µm.

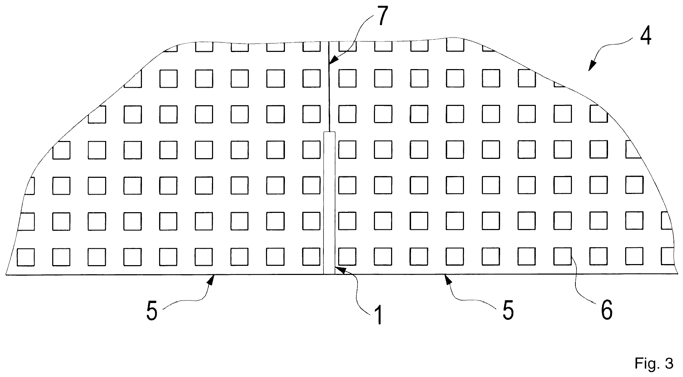

In **Fig. 3** a cutout of an acoustic ceiling 4 having a joint tape 1 applied on two building panels 5 with perforations 6. The joint tape 1 explained in connection with the foregoing figures is attached to an acoustic ceiling. The acoustic ceiling is installed by the method described herein which starts with providing a (plurality of) perforated building panel(s) 5,6 to form the ceiling surface.

Thereafter, joint tape 1 is applied to the joints 7 for selectively covering the joints (or gaps) between the building panels 5.

Thereafter paint or a joint filler is applied to the attached joint tape 1 and at least part of the ceiling surface (uncovered building boards) to firmly attach the joint tape 1 to the building panels and to obscure the edge of joint tape 1. Finally, the edge (area) of joint tape 1 can be sanded.

However, for clarification reasons in **Fig. 3** the edges of joint tape 1, which are obscured according to the method described herin, are shown.

In a specific example, the joint tape is attached to an acoustic ceiling made of plasterboards which are available in the market as CLEANEO CLASSIC 8/18R (Knauf Gips KG/lphofen).

For example, the applied joint tape is covered either by the paint KNAUF INTOL (Knauf Gips KG/lphofen) or by the joint filler KNAUF UNIFLOTT FINISH (Knauf Gips KG/lphofen).

## Claims

1. Joint tape (1) for attachment to a ceiling or a wall, the joint tape (1) comprising a layer of permeable non-woven material (2) and an adhesive layer (3) attached to the permeable non-woven material (2), the adhesive layer (3) being applied to one side of the non-woven material, **characterised in that** said adhesive layer is applied to the non-woven material in a pattern comprising non-woven material sections (21) without adhesive applied thereto, wherein the joint tape (1) has a width of 3 mm to 20 mm, and wherein the joint tape has a thickness of 15 to 80 µm.

2. Joint tape (1) according to claim 1, wherein the adhesive layer (3) is a self-adhesive layer.

3. Joint tape (1) according to claim 1 or 2, wherein the adhesive layer (3) has a weight in the range of 3 to 60 g/m².

4. Joint tape (1) according to any one of the proceeding claims, wherein the adhesive layer (3) comprises a regular pattern of glue dots (31).

5. Joint tape (1) according to claim 4, wherein each glue dot (31) has an identical size, preferably having a diameter in the range between 0.1 to 4.0 mm, preferably between 0.1 to 2.0 mm.

6. Joint tape (1) according to claim 4 or 5, wherein the regular pattern comprises 25 to 15625 glue dots per 625 mm², preferably 100 to 6400 glue dots per 625 mm².

7. Joint tape (1) according to claims 1 to 3, wherein the adhesive layer (3) is applied as a regular pattern comprising glue stripes or as an irregular pattern comprising glue stripes.

8. Joint tape (1) according to any one of the proceeding claims, wherein the adhesive layer (3) comprises a polymer material and wherein the polymer material preferably comprises at least one of the group of acrylates and rubber.

9. Joint tape (1) according to claim 8, wherein the adhesive layer (3) comprises a hot melt adhesive, a dispersion-based adhesive or a solvent-based adhesive.

10. Joint tape (1) according to any one of the proceeding claims, wherein the layer of permeable non-woven material (2) comprises a non-woven material of at least 30 to 100 weight-% of glass-, mineral-, carbon- or synthetic-fibers.

11. Joint tape (1) according to any one of the proceeding claims, wherein the joint tape has a grammage of 15 to 100 g/m².

12. Joint tape (1) according to any one of the proceeding claims, wherein the air permeability of joint tape is 2000 to 7000 l/m²s.

13. Joint tape (1) according to any one of the proceeding claims, wherein the joint tape has a width of 4 mm to 15 mm, preferably of 5 to 10 mm, more preferably of 7 to 9 mm, most preferably of 8 mm.

14. Method for providing a closed surface of building panels comprising the steps of:
- providing a surface of building panels;
- applying a joint tape (1) according to any one of the preceding claims to the joints of the surface of building panels;
- applying a paint or a joint filler covering at least the edge of the joint tape and the adjacent building panels comprising the joint tape (1); and
- optionally sanding the edge area of the joint tape.

15. Use of a joint tape (1) according to claims 1 to 13 for sealing joints on a surface of building panels.

## Patentansprüche

1. Fugenband (1) zur Befestigung an einer Decke oder einer Wand, wobei das Fugenband (1) eine Schicht aus einem durchlässigem Vliesmaterial (2) und eine Haftvermittlerschicht (3) aufweist, welche an dem durchlässigen Vliesmaterial (2) befestigt ist, wobei die Haftvermittlerschicht (3) auf einer Seite des Vliesmaterials aufgebracht ist, **dadurch gekennzeichnet, dass** die Haftvermittlerschicht auf das Vliesmaterial in einem Muster aufgebracht ist, welches Vliesmaterialabschnitte (21) ohne darauf aufgebrachten Haftvermittler umfasst, wobei das Fugenband (1) eine Breite von 3 mm bis 20 mm aufweist, und wobei das Fugenband eine Dicke von 15 µm bis 80 µm aufweist.

2. Fugenband (1) nach Anspruch 1, wobei die Haftvermittlerschicht (3) eine Selbstklebeschicht ist.

3. Fugenband (1) nach Anspruch 1 oder 2, wobei die Haftvermittlerschicht (3) ein Gewicht im Bereich von 3 g/m² bis 60 g/m² aufweist.

4. Fugenband (1) nach einem der vorhergehenden Ansprüche, wobei die Haftvermittlerschicht (3) ein regelmäßiges Muster aus Klebepunkten (31) aufweist.

5. Fugenband (1) nach Anspruch 4, wobei jeder Klebepunkt (31) eine identische Größe aufweist, vorzugsweise mit einem Durchmesser im Bereich zwischen 0,1 mm und 4,0 mm, vorzugsweise zwischen 0,1 mm bis 2,0 mm.

6. Fugenband (1) nach Anspruch 4 oder 5, wobei das regelmäßige Muster aus 25 bis 15625 Klebepunkten pro 625 mm², vorzugsweise 100 bis 6400 Klebepunkten pro 625 mm², gebildet ist.

7. Fugenband (1) nach einem der Ansprüche 1 bis 3, wobei die Haftvermittlerschicht (3) als ein regelmäßiges Muster aus Klebestreifen oder als ein unregelmäßiges Muster aus Klebestreifen aufgebracht ist.

8. Fugenband (1) nach einem der vorhergehenden Ansprüche, wobei die Haftvermittlerschicht (3) ein Polymermaterial enthält, und wobei das Polymermaterial vorzugsweise mindestens eines aus der Gruppe von Acrylaten und Kautschuk enthält.

9. Fugenband (1) nach Anspruch 8, wobei die Haftvermittlerschicht (3) einen Heißschmelz-Haftvermittler, einen Haftvermittler auf Dispersionsbasis oder einen Haftvermittler auf Lösungsmittelbasis enthält.

10. Fugenband (1) nach einem der vorhergehenden Ansprüche, wobei die Schicht aus durchlässigem Vliesmaterial (2) ein Vliesmaterial aus mindestens 30 Gew.-% bis 100 Gew.-% Glas-, Mineral-, Kohlenstoff- oder Synthetikfasern aufweist.

11. Fugenband (1) nach einem der vorhergehenden Ansprüche, wobei das Fugenband eine Grammatur von 15 g/m² bis 100 g/m² aufweist.

12. Fugenband (1) nach einem der vorhergehenden Ansprüche, wobei die Luftdurchlässigkeit des Fugenbandes 2000 l/m²s bis 7000 l/m²s beträgt.

13. Fugenband (1) nach einem der vorhergehenden Ansprüche, wobei das Fugenband eine Breite von 4 mm bis 15 mm, vorzugsweise von 5 mm bis 10 mm, besonders bevorzugt von 7 mm bis 9 mm, am meisten bevorzugt von 8 mm aufweist.

14. Verfahren zur Herstellung einer geschlossenen Oberfläche von Bauplatten, umfassend die Schritte des:
- Bereitstellens einer Oberfläche von Bauplatten;
- Aufbringens eines Fugenbandes (1) nach einem der vorhergehenden Ansprüche auf die Fugen der Oberfläche von Bauplatten;
- Auftragens eines Anstrichmittels oder einer Spachtelmasse, bedeckend zumindest den Rand des Fugenbandes und die angrenzenden Bauplatten, enthaltend das Fugenband (1); und
- optionalen Abschleifens des Randbereichs des Fugenbandes.

15. Verwendung eines Fugenbandes (1) nach einem der Ansprüche 1 bis 13 zum Abdichten von Fugen auf einer Oberfläche von Bauplatten.

## Revendications

1. Bande de joint (1) destinée à être fixée à un plafond ou à un mur, la bande de joint (1) comprenant une couche de matériau non tissé perméable (2) et une couche adhésive (3) qui est fixée au matériau non tissé perméable (2), la couche adhésive (3) étant appliquée sur une face du matériau non tissé, **caractérisé en ce que** la couche adhésive est appliquée sur le matériau non tissé selon un motif comprenant des sections de matériau non tissé (21) sans adhésif appliqué sur celles-ci, dans lequel la bande de joint (1) présente une largeur de 3 mm à 20 mm, et dans lequel la bande de joint présente une épaisseur de 15 µm à 80 µm.

2. Bande de joint (1) selon la revendication 1, dans laquelle la couche adhésive (3) est une couche auto-adhésive.

3. Bande de joint (1) selon les revendications 1 ou 2, dans laquelle la couche adhésive (3) présente un poids dans la plage de 3 g/m² à 60 g/m².

4. Bande de joint (1) selon l'une quelconque des revendications précédentes, dans laquelle la couche adhésive (3) présente un motif régulier de points de colle (31).

5. Bande de joint (1) selon la revendication 4, dans laquelle chaque point de colle (31) a une taille identique, de préférence avec un diamètre compris entre 0,1 mm et 4,0 mm, de préférence entre 0,1 mm et 2,0 mm.

6. Bande de joint (1) selon les revendications 4 ou 5, dans laquelle le motif régulier est constitué de 25 à 15625 points de colle par 625 mm², de préférence de 100 à 6400 points de colle par 625 mm².

7. Bande de joint (1) selon l'une quelconque des revendications 1 à 3, dans laquelle la couche adhésive (3) est appliquée sous la forme d'un motif régulier de bandes adhésives ou d'un motif irrégulier de bandes adhésives.

8. Bande de joint (1) selon l'une quelconque des revendications précédentes, dans laquelle la couche adhésive (3) comprend un matériau polymère, et dans laquelle le matériau polymère comprend de préférence au moins l'un du groupe d'acrylates et le caoutchouc.

9. Bande de joint (1) selon la revendication 8, dans laquelle la couche adhésive (3) comprend un adhésif thermofusible, un adhésif à base de dispersion ou un adhésif à base de solvant.

10. Bande de joint (1) selon l'une quelconque des revendications précédentes, dans laquelle la couche de matériau non tissé perméable (2) comprend un matériau non tissé constitué d'au moins 30 % en poids à 100 % en poids de fibres de verre, de fibres minérales, de fibres de carbone ou de fibres synthétiques.

11. Bande de joint (1) selon l'une quelconque des revendications précédentes, dans laquelle la bande de joint présente un grammage de 15 g/m² à 100 g/m².

12. Bande de joint (1) selon l'une quelconque des revendications précédentes, dans laquelle la perméabilité à l'air de la bande de joint est comprise entre 2000 l/m²s et 7000 l/m²s.

13. Bande de joint (1) selon l'une quelconque des revendications précédentes, dans laquelle la bande de joint présente une largeur de 4 mm à 15 mm, de préférence de 5 mm à 10 mm, de manière particulièrement préférée de 7 mm à 9 mm, de manière la plus préférée de 8 mm.

14. Procédé de fabrication d'une surface fermée de panneaux de construction, comprenant les étapes consistant à :
- la préparation d'une surface de panneaux de construction ;
- l'application d'une bande de joint (1) selon l'une quelconque des revendications précédentes sur les joints de la surface de panneaux de construction ;
- l'application d'une peinture ou d'un mastic à joint couvrant au moins le bord de la bande de joint et les panneaux de construction adjacents comprenant la bande de joint (1) ; et
- le ponçage facultatif de la zone de bord de la bande de joint.

15. Utilisation d'une bande de joint (1) selon l'une quelconque des revendications 1 à 13 pour le scellement de joints sur une surface de panneaux de construction.
